# EUROPÄISCHE PATENTSCHRIFT

(11) **EP 0 809 799 B1**
(45) Veröffentlichungstag und Bekanntmachung des Hinweises auf die Patenterteilung: **28.04.1999**
(21) Anmeldenummer: 96902233.4
(22) Anmeldetag: 14.02.1996
(51) Int. Cl.: G01N 21/69

(54) **VERFAHREN UND ANORDNUNG ZUR BESTIMMUNG DER REINHEIT UND/ODER DES DRUCKS VON GASEN FÜR ELEKTRISCHE LAMPEN**
METHOD AND DEVICE FOR DETERMINING THE PURITY AND/OR PRESSURE OF GASES FOR ELECTRIC LAMPS
PROCEDE ET DISPOSITIF POUR LA DETERMINATION DE LA PURETE ET/OU DE LA PRESSION DE GAZ POUR LAMPES ELECTRIQUES

(30) Priorität: 15.02.1995 DE 19505104
(43) Veröffentlichungstag der Anmeldung: 03.12.1997
(73) Patentinhaber: Patent-Treuhand-Gesellschaft für elektrische Glühlampen mbH, 81543 München (DE)
(72) Erfinder: EISEMANN, Hans, D-12524 Berlin (DE); TWESTEN, Karen, D-10625 Berlin (DE)
(86) Internationale Anmeldenummer: DE9600232
(87) Internationale Veröffentlichungsnummer: WO9625658

(56) Entgegenhaltungen:
- EP-A- 0 617 274
- GB-A- 2 185 573
- US-A- 4 759 630
- US-A- 5 168 323

## Beschreibung

Die Erfindung betrifft ein Verfahren zum Nachweis von Verunreinigungen in Gasen, insbesondere Edelgasen, oder Gasgemischen für elektrische Lampen oder Strahler gemäß dem Oberbegriff des Anspruchs 1 sowie ein Verfahren zur Messung des Drucks von Gasen, insbesondere Edelgasen, oder der Gaskomponenten von Gasgemischen für elektrische Lampen oder Strahler gemäß dem Oberbegriff des Anspruchs 18. Außerdem betrifft die Erfindung eine Anordnung zur Durchführung dieser Verfahren.

Die Bezeichnung elektrische Lampen umfaßt sowohl Glüh- als auch Entladungslampen. Unter dem Begriff elektrischer Strahler sind Gasentladungen zu verstehen, die hauptsächlich elektromagnetische Strahlungen außerhalb des sichtbaren Bereichs, insbesondere im UV- oder IR-Bereich, emittieren.

Die Verfahren nutzen den Einfluß des Gasdrucks bzw. von Verunreinigungen auf das Fluoreszenzspektrum einer Gasentladung, insbesondere einer Glimmentladung. Als Verunreinigungen werden in diesem Zusammenhang gas- oder dampfförmige, sowie feste Substanzen bezeichnet, deren Anwesenheit in Gasen bzw. Gasgemischen für elektrische Lampen oder Strahler - der Kürze wegen im folgenden als Gassystem bezeichnet - unerwünscht ist. In der Regel gelangen diese Verunreinigungen in unkontrollierter Weise in das Gassystem, z.B. bereits während der Lampenfertigung durch verunreinigte Spül- oder Füllgase oder durch undichte Pump- und Füllsysteme. Aber auch bei der fertigen Lampe können Verunreinigungen in das Gassystem der Lampe gelangen, beispielsweise durch Leckagen am Lampenkolben selbst oder auch während des Lampenbetriebs, z.B. durch verunreinigte Elektroden oder erhöhtem Elektrodenabbrand aufgrund unzureichenden Fülldrucks. Die Folge von Verunreinigungen - gleich welcher Ursache- sind letzlich funktionsunfähige Lampen oder Lampen mit eingeschränkter Lebensdauer bzw. Maintenance.

Ziel allgemeiner Bestrebungen ist es deshalb, bereits bei der Lampenfertigung für eine möglichst geringe Verunreinigung des Gassystems Sorge zu tragen. Darüber hinaus ist es im Sinne einer lückenlosen Qualitätsüberwachung wünschenswert, fertige Lampen mit unakzeptabel hohen Verunreinigungen bzw. unzulässigen Abweichungen vom Sollfülldruck zu erkennen und auszusortieren. Vor diesem Hintergrund kommt einem raschen und zuverlässigen Nachweis entsprechender Verunreinigungen sowie einer Kontrolle des Fülldrucks große Bedeutung zu.

Ein Verfahren zur Bestimmung der Gasreinheit ist durch den Beitrag ,,Gasreinheitstest bei Halogen-Glühlampen mit Hilfe eines Spektrallinienvergleichs" von M. Gaugel in der Buchreihe ,,Technisch-Wissenschaftliche Abhandlungen der OSRAM-Gesellschaft", 12. Band, S. 546-549, Springer-Verlag, Berlin 1986, bekannt. Dort wird das Licht von Halogen-Glühlampen durch zwei Strahlteiler in drei Lichtbündel aufgeteilt und drei spektral unterschiedlich empfindlichen Photomultipliern zugeführt. Die maximale spektrale Empfindlichkeit der einzelnen Photomultiplier liegen bei der Wellenlänge um 410 nm, 523 nm bzw. 616 nm, d.h. im blauen, grünen und roten Bereich des elektromagnetischen Spektrums. Mittels zweier Analog-Dividierer werden die Verhältnisse der Photomultipliersignale "Rot/Blau" und "Rot/Grün" gebildet und durch zwei Komparatoren verglichen, ob die entsprechenden Werte innerhalb eines voreinstellbaren Toleranzbereichs liegen. Ist dies nicht der Fall, wird die Halogen-Glühlampe als fehlerhaft erkannt, d.h. es liegt entweder ein Füllungsfehler und/oder eine unzulässige Gasverunreinigung vor.

Nachteilig bei dieser Lösung ist, daß sich die zu prüfende Halogen-Glühlampe inklusive optischem Aufbau und Photomultiplier während der Messung in einem lichtundurchlässigen Gehäuse befinden müssen. Andernfalls führen gleichphasige Störsignale, beispielsweise Umgebungslicht, zu Fehlmessungen, da diese Störsignale durch die drei Photomultiplier spektral völlig unterschiedlich gewichtet werden und deshalb bei der Quotientenbildung nicht eliminiert werden.
In der US 4 759 630 ist eine Anordnung zur Bestimmung der Qualität von Glühlampen bekannt. Sie enthält ein Gerät zur Erzeugung einer Entladung zwischen der Glühwendel und einer auf der Außenwandung des Lampenkolbens aufgebrachten Elektrode sowie eine Vorrichtung zur Analyse der von der Entladung emittierten Strahlung im Wellenlängenbereich zwischen 550 nm und 570 nm. Die Lampenqualität wird durch das zeitliche Verhalten dieser Strahlung beurteilt, die optional mit der Strahlung im Wellenlängenbereich zwischen 660 nm und 680 nm verglichen wird.

In der US3292988 dient die Intensität von Spektrallinien der Füllgaskomponente Argon mit Wellenlängen größer 650 nm zur Kontrolle des Quecksilber-Dampfdrucks in Leuchtstofflampen während des Lampenbetriebs.

Die US 5 168 323 schlägt eine Anordnung und ein Verfahren zur Bestimmung von Verunreinigungen in einem Gas vor. Die Anordnung umfaßt zwei sich gegenüberstehende Elektroden, zwischen denen hindurch das Gas strömt, eine mit den Elektroden verbundene niederfrequente Wechselspannungsquelle und eine optische Meßvorrichtung. Mit Hilfe der Wechselspannungsquelle wird eine Bogenentladung erzeugt, deren Emissionslinien mittels der Meßvorrichtung detektiert werden. Aus den Intensitäten charakteristischer Spektrallinien der verschiedenen Verunreinigungen werden deren Konzentrationen mit Hilfe eines linearen Gleichungssystems bestimmt.

Eine erste Aufgabe der Erfindung ist es, die genannten Nachteile zu beseitigen und ein relativ einfach realisierbares und insbesondere in die Lampenfertigung integrierbares Verfahren zum Nachweis von Verunreinigungen in Gasen oder Gasgemischen für elektrische Lampen oder Strahler anzugeben. Außerdem soll das Verfahren insbesondere auch für die Funktions- und/oder Qualitätskontrolle von elektrischen Lampen geeignet sein. Diese Aufgabe wird erfindungsgemäß durch die kennzeichnenden Merkmale des Anspruchs 1 gelöst. Weitere vorteilhafte Merkmale dieses Teils der Erfindung sind in den darauf gerichteten Unteransprüchen erläutert.

Eine weitere Aufgabe der Erfindung ist die Bestimmung des Druckes von Gasen, insbesondere von Edelgasen, oder den Gaskomponenten von Gasgemischen für elektrische Lampen oder Strahler. Außerdem soll das Verfahren insbesondere auch für die Funktions- und/oder Qualitätskontrolle von elektrischen Lampen oder Strahlern geeignet sein. Diese Aufgabe wird erfindungsgemäß durch die kennzeichnenden Merkmale des Anspruchs 18 gelöst. Weitere vorteilhafte Merkmale sind in den darauf gerichteten Unteransprüchen erläutert.

Eine weitere Aufgabe der Erfindung besteht schließlich darin, eine Anordnung anzugeben, mit der die vorgeschlagenen Verfahren ausgeführt werden können. Diese Aufgabe wird durch eine Anordnung gemäß Anspruch 32 gelöst. Weitere vorteilhafte Merkmale der Anordnung sind in den Ansprüchen 33 bis 38 erläutert.

Der Grundgedanke der Erfindung besteht darin, das Gas bzw. die Gaskomponenten des Gasgemisches und die darin ggf. enthaltenen Verunreinigungen mittels einer Gasentladung zur Aussendung elektromagnetischer Strahlung anzuregen. Der Nachweis ggf. beigemischter gas- und/oder dampfförmiger Verunreinigungen bzw. die Bestimmung des Drucks des Gases bzw. der Gaskomponente erfolgt mittels der gemessenen Intensität einer oder mehrere geeigneter Spektrallinien dieser Strahlung. Ein ganz wesentlicher Aspekt für beide Verfahren ist dabei die selektive Messung der Spektrallinien. In Vorversuchen hatte es sich nämlich gezeigt, daß zuverlässige Ergebnisse unter fertigungstechnischen Bedingungen nur bei Einhaltung der im folgenden erläuterten Meßbedingungen erzielt werden können.

Entscheidend für das Verfahren zum Nachweis von Verunreinigungen ist die gezielte Verwendung einer oder mehrerer Spektrallinien, deren Intensitäten im relevanten Bereich weitgehend druckunabhängig sind. Auf diese Weise werden Fehlmessungen aufgrund von Druckschwankungen des Gases vermieden. Dies ist für die Praxistauglichkeit des Verfahrens von großer Bedeutung, insbesondere auch beim Nachweis von Verunreinigungen in den Lampengefäßen elektrischer Lampen, da die Fülldrucke der Lampen fertigungsbedingt streuen. Spektrallinien, deren Intensitäten druckabhängig sind, können aus diesem Grund zu falschen Ergebnissen führen. Wird im Unterschied zur Erfindung die Intensität der Strahlung über einen relativ breiten Wellenlängenbereich integriert, so können im ungünstigen Fall ebenfalls druckabhängige Spektrallinien erfaßt werden. Fehlmessungen bei Schwankungen des Fülldrucks sind die Folge.

Die konkrete Auswahl von geeigneten Spektrallinien erfolgt unter Berücksichtigung ggf. vorhandener Gaskomponenten, z.B. den Füllungsbestandteilen von Metallhalogenid-Hochdruck-Entladungslampen. Dabei werden nur einzelne Spektrallinien selektiert, die nicht mit anderen Linien des Fluoreszenzspektrums überlappen oder zusammenfallen. Der zulässige Abstand der selektierten Linien zu Nachbarlinien sollte vorteilhaft größer sein, als die spektrale Auflösung der Messung. Dadurch wird verhindert, daß die Intensität unerwünschter Linien mitgemessen und so das Ergebnis verfälscht wird.

Für das Verfahren zur Bestimmung des Drucks von Gasen, insbesondere von Edelgasen, oder der Gaskomponenten von Gasgemischen wird gezielt eine oder mehrere Spektrallinien des Gases bzw. der jeweiligen Gaskomponente verwendet, wobei die Intensität mindestens einer Spektrallinie druckabhängig ist. In einem von den Anregungsbedingungen abhängigen Druckbereich, typisch vom Vorvakuumbereich bis Atmosphärendruck, insbesondere im Bereich zwischen ca. 0,1 kPa und ca. 40 kPa, nimmt die Intensität geeigneter Spektrallinien mit dem Druck zu. Mit Hilfe der gemessenen druckabhängigen Intensität und einee Kalibriermeßwerts wird dann der Absolutdruck des Gases bzw. der Partialdruck der entsprechenden Gaskomponente ermittelt.

In verbesserten Varianten beider Verfahren wird jeweils ein Quotient aus den Intensitäten zweier Spektrallinien gebildet, wobei die Intensität mindestens einer Linie druckunabhängig ist. Bevorzugt sind die beiden Spektrallinien so eng benachbart, daß Rauschsignale und gleichphasige Störsignale, insbesondere Umgebungs- bzw. Streulicht, spektral nahezu gleich bewertet werden. Der Abstand der beiden Spektrallinien beträgt typisch weniger als ca. 100 nm, bevorzugt weniger als ca. 50 nm. Da die genannten Störsignale innerhalb dieses Abstandes eine nahezu konstante spektrale Intensitätsverteilung haben, d.h. relativ breitbandig im Vergleich zu den selektierten Spektrallinien sind, werden sie bei der Quotientenbildung weitgehend eliminiert. Ebenso werden gleichphasige Signalabschwächungen, beispielsweise bei elektrischen Lampen verursacht durch Kolbenschwärzung, eliminiert. Aus diesen Gründen ist die geschilderte Verhältnismessung (ratiometrisches Meßverfahren) einer prinzipiell möglichen Absolutmessung der Intensität einer einzigen Spektrallinie vorzuziehen, bei der Störeffekte das Meßergebnis stark verfälschen, was sich in der Regel nicht nachträglich korrigieren läßt.

Die Auswahl geeigneter Spektrallinien für die Verhältnismessung richtet sich nach dem konkreten Gas bzw. den Gaskomponenten. Im Falle der Anwesenheit von Argon finden sich geeignete Spektrallinien im Wellenlängenbereich zwischen 650 nm und 800 nm bzw. zwischen 800 nm und 1000 nm.

In einer konkreten Ausführung des Verfahrens zum Nachweis von Verunreinigungen wird gezielt mindestens eine Spektrallinie des Gases bzw. einer Gaskomponente selektiert, deren Wellenlänge(n) einer höheren Anregungsenergie entspricht (entsprechen) als jene der Spektrallinien der zu bestimmenden Verunreinigungen. Ggf. vorhandene Verunreinigungen werden folglich bevorzugt angeregt. Vereinfachend gesagt geht ein Teil der elektrischen Leistung der Gasentladung zunehmend in diese "Verlustkanäle" statt in die Besetzung der den selektierten Spektrallinien entsprechenden angeregten Zustände des Gases bzw. der Gaskomponenten. Dadurch nehmen die Intensitäten der selektierten Spektrallinien ab (die entsprechenden optischen Übergänge werden durch die Verunreinigungen zunehmend "gequencht", d.h. die Besetzungsdichte der zugehörigen angeregten Zustände nimmt ab) und zwar um so mehr, je höher die Konzentration der Verunreinigungen ("Quenchpartner") ist. Aus diesem Grunde ist die Abschwächung der Intensitäten der selektierten Spektrallinien ein indirekter Nachweis für innerhalb des Lampengefäßes befindliche Verunreinigungen.

Der Vorteil dieses indirekten Verfahrens ist, daß Verunreinigungen unspezifisch, d.h. in ihrer Gesamtheit erfaßt werden. Dadurch gelingt es auf einfache Weise mit nur einer einzigen Messung -bzw. zwei bei der ratiometrischen Variante- Verunreinigungen nachzuweisen. Deshalb ist dieses Verfahren insbesondere für Kontroll- und Überwachungszwecke geeignet, um beim Auftreten von Verunreinigungen entsprechende Maßnahmen auszulösen. Ein Beispiel hierfür ist die Qualitätskontrolle bei der Herstellung elektrischer Lampen, wo Lampenkolben mit Verunreinigungen erfaßt und aussortiert werden. Durch die rasche und einfache meßtechnische Erfassung von Verunreinigungen läßt sich dieses Verfahren gut in automatisierte schnellaufende Fertigungsprozesse integrieren.

Erfaßt werden nahezu alle unerwünschten festen - z.B. Rückstände des Glasformungsprozesses - und/oder flüssigen und/oder gas- bzw. dampfförmigen Verunreinigungen, die beispielsweise während des Abpump- oder Füllprozesses in das Lampengefäß gelangen können. Insbesondere umfassen die nachweisbaren Verunreinigungen die Elemente Sauerstoff (O), Wasserstoff (H), Stickstoff (N), Kohlenstoff (C), Silizium (Si) oder auch Verbindungen dieser Elemente, beispielsweise Wasser (H₂O) oder Kohlenwasserstoffe (CH) u.a.. Ursache dieser Verunreinigungen können Leckagen bzw. Defekte im Pumpsystem (z.B. O, H₂O, Öldämpfe) sein oder einzelne kontaminierte Komponenten (z.B. O von oxidierten Elektrodenoberflächen, H₂O eingelagert in Elektrodenoberflächen oder hygroskopischen Metallhalogeniden). Silizium kann als Belag auf den Elektroden auftreten, verursacht z.B. durch fehlerhafte Quetschungen des Lampenkolbens.

In der Lampentechnik werden u.a. Edelgase verwendet, z.B. Argon (Ar), Krypton (Kr), Xenon (Xe) oder Helium (He). Diese weisen Spektrallinien auf, deren Anregungsenergien entsprechend hoch (typisch größer 10 eV) und damit für das Verfahren geeignet sind. Ein weiteres Kriterium für die Tauglichkeit von Spektrallinien ist eine ausreichend über dem Rauschen liegende Intensität. Diese Forderungen werden in idealer Weise durch die Spektrallinien des Argons mit den Wellenlängen λ₁ = 738,4nm, λ₂ = 772,4nm und λ₃ = 811,5nm erfüllt. Falls das zu untersuchende Gas aus Argon besteht bzw. das Gasgemisch Argon enthält, werden daher bevorzugt eine oder mehrere dieser Spektrallinien für das Verfahren verwendet. Im Einzelfall werden ggf. diejenigen Spektrallinien ausgewählt, die nicht durch die Linien anderer Füllungsbestandteile und deren Verbindungen überdeckt werden. In einer besonders bevorzugten Variante wird der Nachweis mit Hilfe des Quotienten der Intensitäten der Argon-Spektrallinien mit den Wellenlängen λ₁ = 772,4nm und λ₂ = 738,4 nm durchgeführt.

Zur Verdeutlichung der Zusammenhänge sind in der folgenden Tabelle 1 einige relevante Anregungsenergien für Argon und für die Verunreinigungen Wasserstoff (H), Stickstoff (N), Sauerstoff (O), Kohlenstoff (C) und Silizium (Si) sowie die Wellenlängen der zugehörigen Spektrallinien angegeben. Daraus ist zu ersehen, daß die Anregungsenergien der Verunreinigungen z.T. erheblich unterhalb jener für Argon liegen.

**Tabelle 1:**

| Anregungsenergien und entsprechende Wellenlängen der korrespondierenden optischen Übergänge für Argon und einige mögliche Verunreinigungen ("Quenchpartner"). | | |
|---|---|---|
| **Komponente** | **Anregungsenergie in eV** | **Wellenlänge in nm** |
| Ar | 13,07 | 811,5 |
| | 13,30 | 738,4 |
| H | 12,09 | 656,3 |
| N | 11,76 | 868,3 |
| | 11,75 | 870,3 |
| O | 10,74 | 777,2 |
| C | 9,17 | 833,5 |
| | 8,85 | 909,4 |
| | 8,77 | 965,8 |
| Si | 7,60 | 623,7 |
| | 7,32 | 725,1 |

Bei molekularen Verunreinigungen, wie z.B. Wasser (H₂O), OH-Radikale, Kohlenwasserstoffe usw., treten neben den elektronischen Anregungen noch die Verlustkanäle der Rotations- und Vibrationsanregung auf. Die dafür erforderlichen Energien liegen im meV-Bereich bzw. betragen wenige eV (kleiner ca. 3eV) und sind somit in jedem Fall deutlich kleiner als die erforderlichen Anregungsenergien für Argon.

In einer weiteren konkreten Ausführung des Verfahrens wird gezielt die Intensität einer oder mehrerer Spektrallinien der jeweiligen Verunreinigung gemessen. Der Vorteil ist, daß mit Hilfe dieses direkten Verfahrens die jeweilige Verunreinigung spezifisch nachgewiesen, d.h. identifiziert und mittels einer Kalibriermessung ihre Konzentration bestimmt werden kann. Dies erleichtert das Auffinden der Ursache für die jeweilige Verunreinigung, z.B. ein defektes Pumpsystem beim Auftreten von Kohlenwasserstoff-Verbindungen (Öldämpfe). Der Nachteil ist, daß dieses direkte Verfahren relativ aufwendig ist, da für jede mögliche Verunreinigung jeweils die Intensität mindestens einer Linie (bzw. Bande) gemessen und ausgewertet werden muß.

Für die Bestimmung der Konzentration der Moleküle N₂, CN, CH oder C₂ eignen sich beispielsweise die Intensitäten der zugehörigen Molekularbanden bei den Wellenlängen 357,7 nm, 388,34 nm, 388,9 nm bzw. 468,48 nm und 516,5 nm. Zur Eliminierung gleichphasiger Störungen werden diese Meßwerte auf die Intensität einer geeigneten druckunabhängigen Spektrallinie bezogen. Bei der Anwesenheit von Argon eignet sich beispielsweise die Spektrallinie mit der Wellenlänge 738,4 nm. Tabelle 2 zeigt eine Aufstellung einiger für Entladungslampen typische Verunreinigungen. Ebenfalls aufgelistet sind die für deren direkten Nachweis geeigneten Wellenlängen.

**Tabelle 2:**

| Für Entladungslampen typische Verunreinigungen und für deren direkten Nachweis geeignete Wellenlängen. | |
|---|---|
| **Verunreinigung** | **Wellenlänge in nm** |
| H | 656,3 |
| HgH | 421,9 |
| O | 777,2 |
| N₂ | 380,5; 357,7; 337,1 |
| CN | 388,4; 419,2 |
| CH | 388,9; 432,4; 431,4 |
| C₂ | 516,5; 473,7; 468,48 |
| Si | 302,0; 300,7 |
| Re | 346,0 |
| W | 400,9 |

Ein erweitertes zweistufiges Verfahren kombiniert die direkte und die indirekte Meßmethode. In der ersten Verfahrensstufe wird zunächst gemäß der indirekten Meßmethode überprüft, ob überhaupt eine Verunreinigung vorliegt. Nur wenn dies der Fall ist, wird in der zweiten Verfahrensstufe mittels der direkten Meßmethode eine qualitative und/oder quantitative Bestimmung der einzelnen Bestandteile der Verunreinigung vorgenommen.

Eine weiter Variante des Verfahrens dient zur Beurteilung der Qualität von Entladungslampen, insbesondere Metallhalogenid-Hochdruck-Entladungslampen. In dieser Variante wird optional zusätzlich die zeitabhängige Intensitätsänderung der Spektrallinien während der Anlaufphase der Lampen für die Beurteilung der Elektrodenqualität genutzt. Zu diesem Zweck wird mittels der Lampenelektroden eine Glimmentladung innerhalb des Entladungsgefäßes der Lampe erzeugt. Je nach Beschaffenheit und Zustand der Elektrode -z.B. Oberfläche, Geometrie, Material- brennt diese Glimmentladung beispielsweise zunächst am Elektrodenschaft und wandert dann zur Elektrodenspitze. Die Zeitdauer, die hierfür nötig ist, hängt von der Qualität der Elektrode ab und schwankt typisch zwischen einigen zehntel Sekunden und einigen Sekunden. Sie verlängert sich bei oxidierter und/oder durch Quarz oder andere Ablagerungen verunreinigter Elektrode sowie bei ungeeigneter Elektrodengeometrie. Desweiteren wird das Anlaufverhalten durch im Entladungsgefäß ggf. befindliche Verunreinigungen und zu geringen Fülldruck des Zündgases, z.B. Argon, beeinflußt. Liegen die Dauer der Anlaufphase sowie der Intensitätsverlauf der Spektrallinien während der Anlaufphase innerhalb vorgegebener Toleranzbereiche, so erfüllt die Lampe die Qualitätsanforderungen. Andernfalls kann sie als fehlerhaft oder untauglich aussortiert werden.

Bei Entladungsiampen mit festen oder flüssigen Füllungsbestandteilen wird die Glimmentladung vorteilhaft nur mit kleiner Leistung und/oder nur kurzzeitig, z.B. intermittierend betrieben. Auf diese Weise wird verhindert, daß ein signifikanter Anteil dieser Füllungsbestandteile in die Dampfphase übergeht. Andernfalls könnten nämlich Spektrallinien des Dampfes angeregt werden, die Spektrallinien eventuell vorhandener Verunreinigungen überdecken und so Fehlmessungen verursachen.

In einer konkreten Ausführung des Verfahrens zur Bestimmung des Drucks von Argon wird die Intensität der Spektrallinie mit der Wellenlänge von λ = 763,5nm bestimmt. In einem weiten Druckbereich, insbesondere im Bereich zwischen ca. 0,1 kPa und ca. 40 kPa, nimmt die Intensität dieser Spektrallinie mit dem Druck zu. Mittels Kalibriermessungen wird aus der Intensität direkt der Druck ermittelt. In einer ratiometrischen Variante wird diese Intensität auf die gemessene druckunabhängige Intensität einer zweiten Spektrallinie bezogen. Geeignet ist beispielsweise die Spektrallinie des Argon mit einer Wellenlänge von 738,4 nm.

Eine geeignete Anordnung zur Durchführung der erfindungsgemäßen Verfahren besteht aus einem Gefäß, in dem sich das Gas bzw. Gasgemisch und die darin ggf. enthaltenen Verunreinigungen befinden, einer Energieversorgungseinheit, welche über eine Einkoppelvorrichtung mit dem Gefäß verbunden ist und die Gasentladung, insbesondere eine Glimmentladung erzeugt, einer spektroskopischen Meßvorrichtung, welche die Intensität(en) der Spektrallinie(n) mißt sowie einer Auswertevorrichtung, welche aus den Meßwerten ggf. eine Verunreinigung nachweist bzw. spezifische Verunreinigungen identifiziert sowie deren Konzentrationen angibt und/oder den (Partial)Druck des Gases oder der Gaskomponenten des Gasgemisches ermittelt.

Das Gefäß kann beispielsweise ein Lampenkolben sein oder ein mit dem Pump- oder Gasmischsystem einer Lampenfertigungslinie verbundenes Probengefäß.

Als Energieversorgungseinheit eignet sich z.B. ein Hochfrequenzgenerator. In diesem Fall kann die Einkoppelvorrichtung entweder aus innerhalb des Entladungsgefäßes angeordneten Elektroden, beispielsweise den Lampenelektroden einer Entladungslampe, oder auch aus externen Elektroden bestehen. Im letzteren Fall werden mit dem Hochfrequenzgenerator verbundene Elektroden auf der Außenwandung des Gefäßes angebracht. Diese Variante wird auch als kapazitive Hochfrequenzentladung mit dielektrischen Elektroden bezeichnet. Sie eignet sich insbesondere auch für die Anwendung auf elektrische Glühlampen, wobei hier alternativ auch die Glühwendel selbst als eine interne Elektrode dienen kann. In diesem Fall wird nur noch eine externe (dielektrische) Elektrode benötigt. Ebenso kann das Gefäß im Innern einer durch den Hochfrequenzgenerator gespeisten Spule angeordnet sein, so daß eine induktive Hochfrequenzentladung vorliegt.

Die spektrale Trennvorrichtung besteht im einfachsten Fall aus einem schmalbandigen optischen (Interferenz)Filter-typische Auflösungen betragen zwischen ca. 5 nm und 10 nm - pro zu messender Spektrallinie. Alternativ eignet sich ein Spektrometer, welches die Strahlung mittels dispersiver Elemente -beispielsweise Prismen oder Gitter - in ihre spektralen Anteile zerlegt, d.h. ein optisches Spektrum erzeugt. Ein weiterer Vorteil ist die höhere Auflösung eines Spektrometers -typisch 1 nm und weniger. Zur Erhöhung der Nachweisgrenze kann es vorteilhaft sein, zusätzlich optische Elemente, z.B. Linsen oder Spiegel zwischen dem Gefäß und der spektralen Trennvorrichtung anzubringen, welche der Führung und Bündelung der Fluoreszenzstrahlung hin zur spektralen Trennvorrichtung dienen.

Die Auswertevorrichtung weist im einfachsten Fall ein oder mehrere Detektorelemente auf, beispielsweise Fotodioden oder eine Diodenzeile bzw. ein Diodenarray. Die Detektorelemente wandeln die spektralen Anteile der Strahlung in - ihrer jeweiligen Intensität entsprechende - Spannungssignale. Eine Anzeigeneinheit macht die Spannungssignale in analoger oder digitaler Darstellung sichtbar. Darüber hinaus können die Spannungssignale auch einem elektronischen Rechner zugeführt werden, der beispielsweise die Quotientenbildung der ratiometrischen Varianten ausführt. Mit dem Ergebnis und anhand der Kalibrierwerte kann dann die Konzentration einzelner Verunreinigungen sowie der Gasdruck errechnet und ausgegeben werden. Zur Verbesserung des Signal-Rauschverhältnisses und/oder um die Auswirkungen stochastischer Intensitätsschwankungen auf die Meßergebnisse zu vermindern, ist es vorteilhaft, mit Hilfe des Rechners eine kummulative Mittelung über mehrere gleichartige Messungen durchzuführen.

Zur Ermittlung der Kalibrierwerte für die spektroskopische Qualitätskontrolle bei der Herstellung von Entladungslampen hat sich das folgende Verfahren bewährt.

In einem ersten Schritt werden Grenzwerte für Parameter ermittelt, welche als Maß für die Funktionsfähigkeit und die Performance eines Lampentyps, beispielsweise Metallhalogenid-Hochdruckentladungslampen dienen. Geeignete Lampenparameter sind z.B. die Zündspannung - das ist die zum Zünden der Entladung erforderliche Spannung-, die Anlaufspitzenspannung -das ist der Wert des Maximums, den die Spannung nach Einschalten der Lampe während des Aufbaus einer stabilen Bogenentladung durchläuft -, die Wiederzündspitzenspannung - das ist der Spitzenwert der an den Lampenelektroden anliegenden Wechselspannung - sowie die Bogenübernahmezeit - das ist die Zeitdauer zwischen Einschalten der Lampe und Ausbildung des Bogens. Die Werte der genannten elektrischen Lampenparameter nehmen mit zunehmender Verunreinigung innerhalb der Lampe zu.

In einem zweiten Schritt werden in entsprechenden Vergleichsmessungen die Werte der elektrischen Lampenparameter mit den spektroskopischen Meßwerten korreliert. Dazu werden beispielsweise Lampen mit definierten Verunreinigungen gefertigt, spektroskopisch vermessen und den ebenfalls jeweils ermittelten korrespondierenden Lampenparametern zugeordnet. Auf diese Weise läßt sich für jeden Lampentyp und verschiedene Verunreinigungsgrade ein Satz Wertebereiche für die spektralen Intensitäten oder Intensitätsverhältnisse erstellen. Dieser Satz dient dann bei einer aktuellen Bestimmung der Verunreinigung einer Lampe oder einer Lampenfüllung als Referenz. Liegen die aktuellen Meßwerte -bzw. die daraus berechneten Verhältnisse - innerhalb des jeweiligen Toleranzbereiches ist die Verunreinigung gering, andernfalls inakzeptabel und die betreffenden Lampe wird aussortiert bzw. die Fertigung wird unterbrochen, um die Ursache für die Verunreinigung zu beheben.

Ein großer Vorteil der spektroskopischen Qualitätskontrolle liegt in der Schnelligkeit der zugrunde liegenden Messungen. Typisch innerhalb weniger Sekunden liegt das Ergebnis vor. Im Gegensatz dazu dauert die im Rahmen der Kalibrierung der spektroskopischen Methode beschriebene Ermittlung der elektrischen Lampenparameter bis zu mehreren Minuten (Beispielsweise werden als Grenzwert für die Bogenübernahmezeit typisch bis zu 6 Minuten toleriert, d.h. ggf. müßte vor einer Aussortierung der betreffenden Lampe diese Zeitdauer abgewartet werden.).

Die Schnelligkeit prädestiniert das erfindungsgemäße Verfahren für den Einsatz in schnellaufenden Lampenfertigungslinien. Eine Variante sieht die Integration des spektroskopischen Meßverfahrens in das Lampenfertigungsverfahren wie folgt vor. Der Grundgedanke dabei ist, schnelle spektroskopische Online-Kontrollen in die wesentlichen Fertigungsschritte einzuführen. Dadurch werden Verunreinigungen ggf. schon in einer frühen Phase des Fertigungsablaufs erfaßt und nicht, wie bisher üblich, erst am fertigen Produkt. Folglich läßt sich -gerade bei schnellaufenden Fertigungslinien - der Ausschuß deutlich reduzieren.

Bevorzugt werden spektroskopische Messungen an den folgenden drei Fertigungsstufen durchgeführt: 1. vor dem Füllen des Entladungsgefäßes der Lampe und vor der Elektrodenmontage, mittels Entladung in einem mit der Vakuumringleitung verbundenen Probegefäß, zur Kontrolle des Gassystems der Fertigungslinie auf Verunreinigungen, 2. nach dem Einsetzen der Elektroden in das Entladungsgefäß, mittels Probeentladung innerhalb des Entladungsgefäßes, insbesondere mittels Probeentladung zwischen den Lampenelektroden, zur Kontrolle des Elektrodensystems und der Innenwandung des Entladungsgefäßs auf Verunreinigungen sowie 3. nach dem Füllen und Verschließen des Entladungsgefäßes, mittels Probeentladung innerhalb des Entladungsgefäßs, insbesondere mittels Probeentladung zwischen den Lampenelektroden, zur Überprüfung, ob die Verunreinigungen im Innern der fertigen Lampe innerhalb eines vorgegebenen Toleranzbereiches liegen. Falls die Meßwerte innerhalb des Toleranzbereiches liegen, wird das betreffende Entladungsgefäß bzw. die entsprechende komplette Lampe für ihren bestimmungsgemäßen Gebrauch freigegeben, andernfalls wird sie aussortiert.

Die Erfindung wird im folgenden anhand einiger Ausführungsbeispiele näher erläutert. Es zeigen
- Fig. 1: eine schematische Darstellung einer Anordnung für den spektroskopischen Nachweis von Verunreinigungen sowie die Bestimmung des Gasdrucks in einem Probengefäß,
- Fig. 2: das mit der Anordnung aus Figur 1 ermittelte Verhältnis der Intensitäten zweier Spektrallinien von Argon mit den Wellenlängen 763,5 nm und 738,4 nm als Funktion des Argonfülldrucks im Probengefäß 1,
- Fig.3: eine schematische Darstellung einer Anordnung für den spektroskopischen Nachweis von Verunreinigungen innerhalb des Entladungsgefäßes einer Lampe.

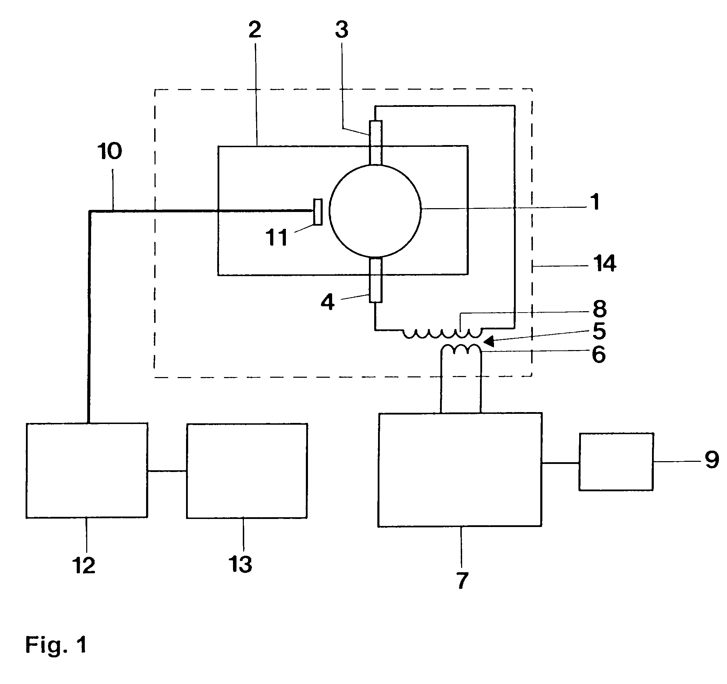

Figur 1 zeigt eine schematische Darstellung einer Anordnung zur Durchführung des Verfahrens zum Nachweis und zur Bestimmung der Konzentration von Verunreinigungen sowie zur Bestimmung des Gasdrucks in einem Probengefäß. Die Anordnung besteht aus einem rohrförmigen Probengefäß 1 (im Querschnitt dargestellt) aus Glas, einem massiven rechteckigen Klotz 2 aus Teflon, der das Probengefäß 1 teilweise umgibt, zwei metallischen stiftartigen Elektroden 3, 4, die teilweise in den Klotz 2 hineinragen und dort diametral gegenüberstehend auf der Außenwandung des Probengefäßes 1 angeordnet sind, einem Hochspannungsübertrager 5, dessen Primärwicklung 6 mit einem Hochfrequenzsender 7 und dessen Sekundärseite 8 mit den Elektroden 3, 4 verbunden sind, einem Trigger-Impulsgenerator 9, der mit dem Hochfrequenzsender 7 verbunden ist, einem Lichtwellenleiter 10, dessen erstes Ende in einen Teil des Klotzes 2 hineinragt und in der Nähe der Außenwandung des Probengefäßes 1 angeordnet ist, einem unmittelbar vor der Stirnseite des ersten Endes des Lichtwellenleiters 10 angeordneten Ordnungsfilter 11, einem optischen Spektrometer 12, dessen Eingang mit dem zweiten Ende des Lichtwellenleiters 10 und dessen Ausgang mit einem Rechner 13 verbunden ist sowie einem metallischen Abschirmgehäuse 14, welches den Klotz 2 mit dem Probengefäß 1, den Elektroden 3, 4, dem Ordnungsfilter 11 und dem Hochspannungsübertrager 5 umgibt, wobei der Lichtwellenleiter 10 und die Verbindungskabel zwischen Hochspannungsübertrager 5 und Hochfrequenzsender 7 durch entsprechende Öffnungen im Abschirmgehäuse 14 hindurch in dessen Inneres geführt sind.

Der Durchmesser des rohrförmigen Probengefäßes 1 beträgt ca. 20 mm. An seinen beiden Stirnseiten weist es je einen Metallflansch auf (in der schematischen Querschnittsdarstellung des Probengefäßes 1 nicht dargestellt). Mittels der Metallflansche wird das zuvor evakuierte Probengefäß 1 in der Lampenfertigung typisch mit einem Gasfüll- und Pumpsystem oder einer gasgefüllten Fertigungszelle - auch als ,,Glovebox" bezeichnet - verbunden und mit dem Arbeits- oder Füllgas bzw. -gasgemisch gefüllt. Das Gas bzw. Gasgemisch im Innern des Probengefäßes 1 wird mit Hilfe der Elektroden 3, 4, des Hochspannungsübertragers 5 und des Hochfrequenzsenders 7 ionisiert. Zu diesem Zweck liefert der Hochfrequenzsender 7 eine Wechselspannung mit einer Frequenz von ca. 120 kHz, die mittels des Hochspannungsübertragers 5 einen Spitze-Spitzewert von bis zu 49 kV zwischen den Elektroden 3, 4 erreicht. Die maximale Leistungseinkopplung in die Gasentladung beträgt ca. 200 W. Angesteuert wird der Hochfrequenzsender 7 durch den Trigger-Impulsgenerator 9. Ein Teil der Fluoreszenzstrahlung der Gasentladung wird über das Ordnungsfilter 11, welches nur Strahlung oberhalb ca. 300 nm transmittiert, in den Lichtwellenleiter 10 eingespeist. Diese Strahlung wird dem Spektrometer 12 zugeführt, welches eine Brennweite von 0,5 m und ein Gitter (nicht dargestellt) mit 100 Linien pro mm aufweist. Das vom Gitter erzeugte Spektrum wird auf ein Diodenarray (nicht dargestellt) abgebildet. Die einzelnen Dioden des Arrays wandeln die Strahlungsintensitäten schmaler Wellenlängenbereiche von 0,5 nm in entsprechende Spannungssignale. Die Spannungssignale werden zur Weiterverarbeitung gemäß der erfindungsgemäßen Verfahren an den Rechner 13 geleitet.

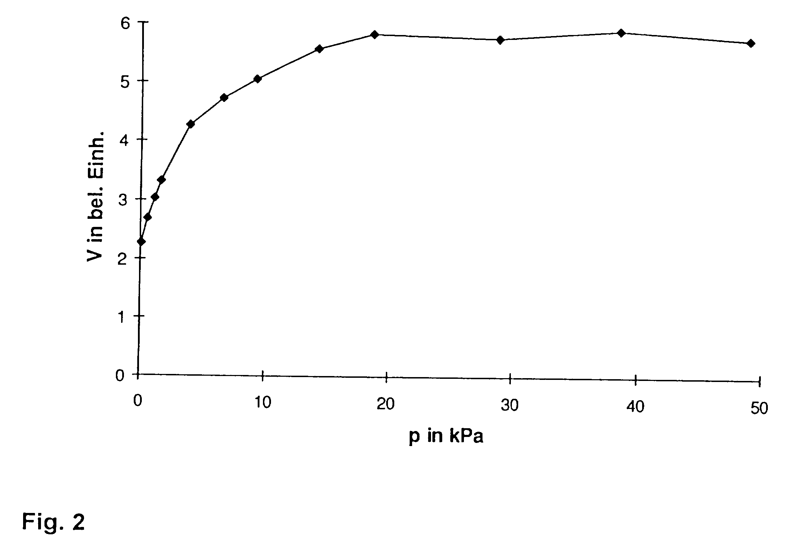

Figur 2 zeigt exemplarisch die mit der Anordnung aus Figur 1 erzielten Meßergebnisse verschiedener Argonfülldrücke. Dargestellt ist das Verhältnis V der Intensitäten zweier Spektrallinien von Argon mit den Wellenlängen 763,5 nm und 738,4 nm in beliebigen Einheiten als Funktion des Argonfülldrucks p in kPa im Probengefäß 1 aus Figur 1. Wie der Figur 2 zu entnehmen ist, nimmt das Verhältnis mit dem Druck zunächst stetig zu. Ab einem Druck von ca. 20 kPa bleibt das Verhältnis über einen weiten Druckbereich im wesentlichen konstant. Ursache hierfür ist die auf 49 kV begrenzte Elektrodenspannung. Wie Vergleichsmessungen mit einem piezoresistiven Manometer zeigen, läßt sich der Druck mit der Anordnung aus Figur 1 und dem geschilderten Verfahren bis zu einem Argonfülldruck von ca. 20 kPa mit einer Genauigkeit von 5 % bestimmen.

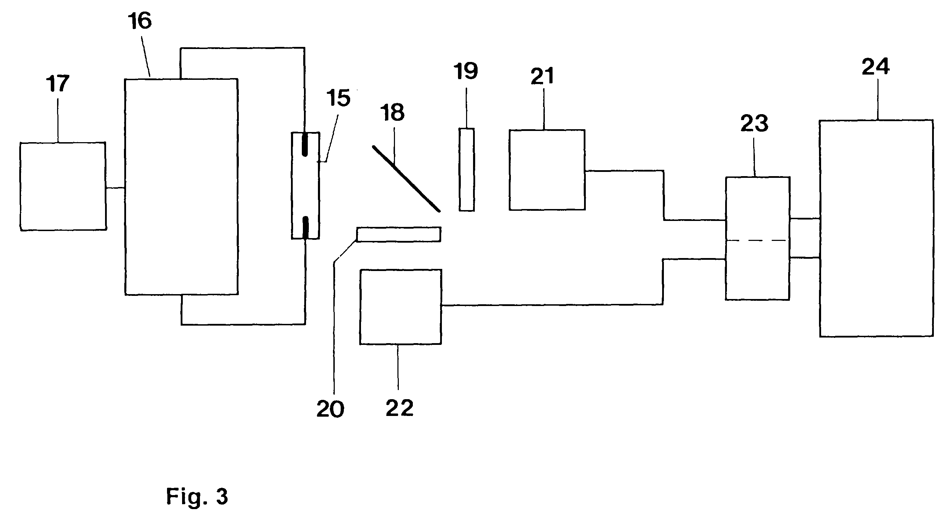

Die Figur 3 zeigt eine schematische Darstellung einer Anordnung zur Durchführung des Verfahrens zum Nachweis von Verunreinigungen innerhalb des Entladungsgefäßes einer Lampe. Die Anordnung besteht aus einer Metallhalogenid-Hochdruckentladungslampe 15, einem Hochfrequenzsender 16, der mit den Elektroden der Lampe 15 verbunden ist und von einem Trigger-Impulsgenerator 17 angesteuert wird, einem halbdurchlässigen Spiegel 18, zwei Interferenzfiltern 19, 20 mit jeweils nachfolgender Fotodiode 21, 22 - wobei der erste Interferenzfilter 19 inklusive zugehöriger Fotodiode 21 der transmittierenden und der zweite Interferenzfilter 20 inklusive zugehöriger Fotodiode 22 der reflektierenden Seite des Spiegels 18 zugewandt sind -, einem mit den Fotodioden 21, 22 verbundenem Zwei-kanal-Voltmeter 23 sowie einem Rechner 24, der mit den beiden Kanälen des Voltmeters 23 verbunden ist.

Mit Hilfe des Hochfrequenzsenders 16 wird für eine kurze Zeitspanne, typisch einige zehntel Sekunden bis einige Sekunden, eine Glimmentladung kleiner Leistung, typisch einige zehntel Watt bis einige Watt, gezündet. Dadurch wird einerseits das Zündgas Argon sowie die ggf. vorhandenen Verunreinigungen innerhalb der Lampe 15 zur Fluoreszenz angeregt, andererseits aber eine signifikante Anregung der restlichen Füllungsbestandteile der Lampe verhindert. Die Interferenzfilter 19 und 20 sind nur für Strahlung in einem Bereich von ±2nm um die Wellenlänge von ca. 738,5 nm bzw. 772,4 nm transparent. Die Fotodioden 21, 22 erzeugen jeweils der Intensität der spektralen Strahlungsanteile entsprechende Spannungssignale, die von den beiden Kanälen des Voltmeters 23 gemessen werden. Der Rechner 24 liest die beiden Kanäle aus, errechnet das Verhältnis der entsprechenden Spannungswerte und ermittelt daraus und mittels eines Kalibrierwertes eine Maßzahl. Liegt die Maßzahl innerhalb eines Toleranzbereichs erfüllt die Lampe 15 die Qualitätsanforderungen. Andernfalls wird sie aufgrund unakzeptabler Verunreinigungen als fehlerhaft aussortiert.

Die Erfindung ist nicht auf die angegebenen Ausführungsbeispiele beschränkt. Insbesondere können einzelne Merkmale unterschiedlicher Ausführungsbeispiele auch miteinander kombiniert werden.

## Patentansprüche

1. Verfahren zum Nachweis von Verunreinigungen in Gasen, insbesondere Edelgasen, oder Gasgemischen für elektrische Lampen oder Strahler, wobei das Gas bzw. die Gaskomponenten des Gasgemisches und die darin ggf. enthaltenen Verunreinigungen mittels einer Gasentladung zur Aussendung elektromagnetischer Strahlung angeregt und zum Nachweis der Verunreinigungen die Intensität eines spektralen Anteils dieser Strahlung gemessen wird, dadurch gekennzeichnet, daß als spektraler Anteil gezielt mindestens eine Spektrallinie mit im relevanten Bereich weitgehend druckunabhängiger Intensität selektiert wird.

2. Verfahren nach Anspruch 1, dadurch gekennzeichnet, daß gezielt diejenige(n) Spektrallinie(n) des Gases bzw. der Gaskomponente selektiert wird (werden), deren Wellenlänge(n) einer höheren Anregungsenergie entspricht (entsprechen) als jene der nachzuweisenden Verunreinigungen.

3. Verfahren nach Anspruch 2, dadurch gekennzeichnet, daß, falls das Gas aus Argon besteht bzw. das Gasgemisch Argon enthält, eine oder mehrere der Spektrallinien von Argon mit den folgenden Wellenlängen selektiert wird bzw. werden: 738,4 nm, 772,4 nm, 811,5 nm.

4. Verfahren nach Anspruch 1, dadurch gekennzeichnet, daß gezielt eine Spektrallinie der jeweiligen Verunreinigung selektiert wird, wobei die Intensität dieser Spektrallinie ein direktes Maß für die Konzentration der entsprechenden Verunreinigung ist.

5. Verfahren nach Anspruch 1, dadurch gekennzeichnet, daß die Verunreinigungen eines oder eine Kombination der Moleküle N₂, CN, CH oder C₂ umfassen.

6. Verfahren nach Anspruch 4 und 5, dadurch gekennzeichnet, daß die Spektrallinie eine Wellenlänge von 357,7 nm, 388,34 nm, 388,9 nm oder 468,48 nm bzw. 516,5 nm aufweist und jeweils ein spektraler Ausschnitt aus einer Molekularbande des zugehörigen Moleküls ist.

7. Verfahren nach Anspruch 4 bis 6, dadurch gekennzeichnet, daß, falls das Gas aus Argon besteht bzw. das Gasgemisch Argon enthält, die spektrale Intensität der Verunreinigung auf die Intensität einer weitgehend druckunabhängigen Argonlinie normiert wird.

8. Verfahren nach Anspruch 7, dadurch gekennzeichnet, daß die Wellenlänge der Argonlinie 738,4 nm beträgt.

9. Verfahren nach einem oder mehreren der vorstehenden Ansprüche, dadurch gekennzeichnet, daß der Quotient der Intensitäten zweier Spektrallinien gebildet wird, wobei die beiden Spektrallinien eng benachbart sind, so daß Rauschsignale und gleichphasige Störsignale bei der Quotientenbildung weitgehend eliminiert werden.

10. Verfahren nach Anspruch 9, dadurch gekennzeichnet, daß die Differenz der Wellenlänge beider Spektrallinien weniger als ca. 100 nm beträgt.

11. Verfahren nach Anspruch 10, dadurch gekennzeichnet, daß die Differenz bevorzugt weniger als 50 nm beträgt.

12. Verfahren nach Anspruch 9, dadurch gekennzeichnet, daß für die Quotientenbildung Spektrallinien mit Wellenlängen im Bereich zwischen 650 nm und 1000 nm selektiert werden.

13. Verfahren nach Anspruch 11, dadurch gekennzeichnet, daß, falls das Gas aus Argon besteht bzw. das Gasgemisch Argon enthält, der Quotient aus den Intensitäten der Spektrallinien des Argons mit den Wellenlängen λ₁ = 772,4nm und λ₂ = 738,4nm gebildet wird.

14. Verfahren nach Anspruch 1, dadurch gekennzeichnet, daß die Gasentladung im Glimmbereich betrieben wird.

15. Verfahren nach Anspruch 1, dadurch gekennzeichnet, daß die Gasentladung mittels Hochfrequenz erzeugt wird.

16. Verfahren nach einem oder mehreren der vorstehenden Ansprüche, dadurch gekennzeichnet, daß die Gasentladung im Innern einer Hochdruck-Entladungslampe erzeugt wird und daß außer der Höhe der Intensität mindestens einer Spektrallinie optional zusätzlich die Zeitdauer, bis die Intensität nach der Anlaufphase der Lampe ihren quasi stationären Wert erreicht hat gemessen wird, wobei aus der Höhe der Intensität und aus der Zeitdauer die Verunreinigung der Lampenfüllung sowie die Elektrodenqualität ermittelt werden.

17. Verfahren nach einem oder mehreren der vorstehenden Ansprüche, dadurch gekennzeichnet, daß die Gasentladung im Innern einer Entladungslampe erzeugt wird und daß folgende zusätzliche Verfahrensschritte ausgeführt werden:
a) Ermitteln von elektrischen Parametern der Lampe, welche Parameter charakteristierend sind für die Funktionsfähigkeit und Performance der Lampe,
b) Messen der Intensität mindestens einer Spektrallinie,
c) Wiederholen der Schritte a) und b) für einige unterschiedlich verunreinigte Lampen, bevorzugt einschließlich Lampen, die aufgrund von Verunreinigungen schlecht bzw. nicht zünden sowie ggf. verzögert eine bzw. keine stabile Bogenentladung ausbilden und Zuordnung der elektrischen zu den entsprechenden spektroskopischen Werten,
um dadurch einen Referenzsatz kalibrierter Werte spektraler Intensitäten bzw. Intensitätsverhältnisse zu erstellen, für die spektroskopische Bewertung der Qualität derartiger Lampen.

18. Verfahren zur Bestimmung des Drucks von Gasen, insbesondere Edelgasen, oder der Gaskomponenten von Gasgemischen für elektrische Lampen oder Strahler, wobei das Gas bzw. die Gaskomponenten mittels einer Gasentladung zur Aussendung elektromagnetischer Strahlung angeregt und aus der Intensität eines spektralen Anteils dieser Strahlung die Höhe des (Partial)Drucks ermittelt wird, dadurch gekennzeichnet, daß als spektraler Anteil der Strahlung gezielt mindestens eine Spektrallinie des Gases bzw. der Gaskomponente mit druckabhängiger Intensität selektiert wird, wobei aus der Intensität bzw. aus den Intensitäten der (Partial)Druck des Gases bzw. der entsprechenden Gaskomponente bestimmt wird.

19. Verfahren nach Anspruch 18, dadurch gekennzeichnet, daß, falls das Gas aus Argon besteht bzw. das Gasgemisch Argon enthält, der (Partial)Druck des Argon aus der Intensität der Spektrallinie mit der Wellenlänge λ ≈ 763,5 nm bestimmt wird.

20. Verfahren nach Anspruch 18, dadurch gekennzeichnet, daß der Druck aus dem Quotient der Intensitäten zweier Spektrallinie ermittelt wird, wobei die Intensität der zweiten Spektrallinie druckunabhängig ist und wobei die beiden Spektrallinien so eng benachbart sind, daß Rauschsignale und gleichphasige Störsignale bei der Quotientenbildung weitgehend eliminiert werden.

21. Verfahren nach Anspruch 20, dadurch gekennzeichnet, daß die Differenz der Wellenlänge beider Spektrallinien weniger als ca. 100 nm beträgt.

22. Verfahren nach Anspruch 21, dadurch gekennzeichnet, daß die Differenz bevorzugt weniger als 50 nm beträgt.

23. Verfahren nach Anspruch 20, dadurch gekennzeichnet, daß, falls das Gas aus Argon besteht bzw. das Gasgemisch Argon enthält, zur Quotientenbildung insbesondere die Intensität der Spektrallinie des Argon mit der Wellenlänge 738,4 nm verwendet wird.

24. Verfahren nach Anspruch 18, dadurch gekennzeichnet, daß die Entladung im Glimmbereich betrieben wird.

25. Verfahren nach Anspruch 18, dadurch gekennzeichnet, daß die Gasentladung mittels Hochfrequenz erzeugt wird.

26. Verfahren nach einem oder mehreren der vorstehenden Ansprüche, dadurch gekennzeichnet, daß das spektroskopische Verfahren zum Nachweis von Verunreinigungen in Gasen durch folgende zusätzliche Verfahrensschritte in das Fertigungsverfahren für Entladungslampen integriert wird:
a) spektroskopische Messung mittels Probeentladung innerhalb des Gassystems der Lampenfertigungslinie, vor dem Füllen des Entladungsgefäßes der Lampe, zur Kontrolle des Gassystems auf Verunreinigungen,
b)spektroskopische Messung mittels Probeentladung innerhalb des Entladungsgefäßes, nach dem Einsetzen der Elektroden in das Entladungsgefäß, zur Kontrolle des Elektrodensystems und der Wandung des Entladungsgefäßes auf Verunreinigungen,
c) spektroskopische Messung mittels Probeentladung innerhalb des Entladungsgefäßes, nach dem Füllen und Verschließen des Entladungsgefäßes, zur Überprüfung, ob die Verunreinigungen im Innern der fertigen Lampe innerhalb eines vorgegebenen Toleranzbereichs liegen.

27. Verfahren nach Anspruch 26, gekennzeichnet durch den folgenden zusätzlichen Verfahrensschritt d): spektroskopische Messung mittels Probeentladung innerhalb des Entladungsgefäßes, nach dem Füllen und Verschließen des Entladungsgefäßes, zur Überprüfung, ob der Kaltfülldruck im Innern der fertigen Lampe innerhalb eines vorgegebenen Toleranzbereichs liegt.

28. Verfahren nach Anspruch 26, gekennzeichnet durch den folgenden zusätzlichen Verfahrensschritt e): Unterbrechen der Fertigung, vor dem Füllen und Verschließen des Entladungsgefäßes, falls die Meßwerte bei den Verfahrensschritten a) und/oder b) außerhalb eines vorgebbaren Toleranzbereichs liegen.

29. Verfahren nach Anspruch 26 oder 27, gekennzeichnet durch den folgenden zusätzlichen Verfahrensschritt f): Aussortieren des betreffenden Entladungsgefäßes, falls die Meßwerte beim Verfahrensschritt c) und oder d) außerhalb eines vorgebbaren Toleranzbereichs liegen.

30. Verfahren nach Anspruch 26, dadurch gekennzeichnet, daß die Probeentladung des Verfahrensschritts a) in einem mit der Vakuumringleitung verbundenen Probegefäß durchgeführt wird.

31. Verfahren nach Anspruch 26 oder 27, dadurch gekennzeichnet, daß die Probeentladungen der Verfahrensschritte b) und c) und ggf. d) zwischen den Elektroden des Entladungsgefäßes durchgeführt werden.

32. Anordnung zur Durchführung eines Verfahrens mit Merkmalen, die in den Ansprüchen 1 bis 17, 18 bis 25 oder 26 bis 31 beschrieben sind, gekennzeichnet durch ein Gefäß (1; 15), in dem sich das Gas bzw. Gasgemisch und die darin ggf. enthaltenen Verunreinigungen befinden, eine Energieversorgungseinheit (7; 16), welche über eine Einkoppelvorrichtung (3, 4, 5) mit dem Gefäß (1) verbunden ist und die Gasentladung erzeugt, eine spektroskopische Meßvorrichtung (12; 18-22), welche die Intensität(en) der Spektrallinie(n) mißt sowie eine Auswertevorrichtung (13; 23, 24), welche aus den Meßwerten die Konzentration der Verunreinigungen bzw. den (Partial)Druck des Gases oder der Gaskomponente ermittelt.

33. Anordnung nach Anspruch 32, dadurch gekennzeichnet, daß die Energieversorgungseinheit aus einem Hochfrequenzsender (7; 16) besteht und daß die Einkoppelvorrichtung aus einem Hochspannungsübertrager (5) und zwei HF-Elektroden (3, 4) besteht, wobei die HF-Elektroden mit der Sekundärwicklung (8) und der Hochfrequenzsender (7) mit der Primärwicklung (6) des Hochspannungsübertrager (5) verbunden sind.

34. Anordnung nach Anspruch 32, dadurch gekennzeichnet, daß das Gefäß aus einem Entladungsgefäß einer Entladungslampe (15) besteht, wobei im Innern des Entladungsgefäßes zwei Lampenelektroden angeordnet sind, die jeweils mit gasdicht nach außen führenden Stromzuführungen verbunden sind, die ihrerseits mit der Energieversorgungseinheit (16) verbunden sind, so daß die Lampenelektroden Bestandteil der Einkoppelvorrichtung sind.

35. Anordnung nach Anspruch 33, dadurch gekennzeichnet, daß mindestens eine der HF-Elektroden (3, 4) auf der Außenwandung des Gefäßes angeordnet ist.

36. Anordnung nach Anspruch 35, dadurch gekennzeichnet, daß das Gefäß aus dem Lampenkolben einer Glühlampe besteht, auf dessen Außenwandung eine erste HF-Elektrode angebracht ist, wobei im Innern des Kolbens eine Glühwendel angeordnet ist, die mit einer gasdicht nach außen führenden Stromzuführung verbunden ist, die ihrerseits mit dem Hochfrequenzsender verbunden ist, so daß die Glühwendel als zweite HF-Elektrode dient.

37. Anordnung nach Anspruch 32, dadurch gekennzeichnet, daß die spektrale Meßvorrichtung aus einem Spektrometer mit Detektoren besteht, wobei mittels des Spektrometers die Strahlung in ihre spektralen Anteile zerlegt, diese den Detektoren zugeführt und von letzteren in ihrer Intensität entsprechende elektrische Signale gewandelt werden.

38. Anordnung nach Anspruch 37, dadurch gekennzeichnet, daß die Auswertevorrichtung aus einem Rechner besteht, der die elektrische Signale einliest, weiterverarbeitet und als Ergebnis den Wert des Gasdrucks und oder die Konzentration der Verunreinigung(en) ausgibt.

## Claims

1. Method for detecting impurities in gases, in particular noble gases, or gas mixtures for electric lamps or radiators, the gas or the gas components of the gas mixture and the impurities which may be contained therein being excited by means of a gas discharge so as to emit electromagnetic radiation and, in order to detect the impurities, the intensity of a spectral fraction of this radiation being measured, characterized in that at least one spectral line with substantially pressure-independent intensity in the relevant range is deliberately selected as the spectral fraction.

2. Method according to Claim 1, characterized in that that or those spectral line(s) of the gas or of the gas components whose wavelength(s) corresponds (correspond) to a higher excitation energy than that of the impurities to be detected is (are) deliberately selected.

3. Method according to Claim 2, characterized in that, if the gas consists of argon or the gas mixture contains argon, one or more spectral lines of argon with the following wavelengths is or are selected: 738.4 nm, 772.4 nm, 811.5 nm.

4. Method according to Claim 1, characterized in that a spectral line of the respective impurity is deliberately selected, the intensity of this spectral line being a direct measure of the concentration of the corresponding impurity.

5. Method according to Claim 1, characterized in that the impurities comprise one of, or a combination of, the molecules N₂, CN, CH and C₂.

6. Method according to Claims 4 and 5, characterized in that the spectral line has a wavelength of 357.7 nm, 388.34 nm, 388.9 nm or 468.48 nm, or 516.5 nm and is in each case a spectral section from a molecular band of the associated molecule.

7. Method according to Claims 4 to 6, characterized in that, if the gas consists of argon or the gas mixture contains argon, the spectral intensity of the impurity is normalized to the intensity of a substantially pressure-independent argon line.

8. Method according to Claim 7, characterized in that the wavelength of the argon line is 738.4 nm.

9. Method according to one or more of the preceding claims, characterized in that the ratio of the intensities of two spectral lines is taken, the two spectral lines being close neighbours, so that noise signals and in-phase interference signals are substantially eliminated when taking the ratio.

10. Method according to Claim 9, characterized in that the wavelength difference of the two spectral lines is less than about 100 nm.

11. Method according to Claim 10, characterized in that the difference is preferably less than 50 nm.

12. Method according to Claim 9, characterized in that, for taking the ratio, spectral lines with wavelengths in the range between 650 nm and 1000 nm are selected.

13. Method according to Claim 11, characterized in that, if the gas consists of argon or the gas mixture contains argon, the ratio of the intensities of the spectral lines of argon with the wavelengths l₁ = 772.4 nm and l₂ = 738.4 nm is taken.

14. Method according to Claim 1, characterized in that the gas discharge is operated in the glow range.

15. Method according to Claim 1, characterized in that the gas discharge is produced by means of radiofrequency.

16. Method according to one or more of the preceding claims, characterized in that the gas discharge is produced in the interior of a high-pressure discharge lamp, and in that further to the level of the intensity of at least one spectral line the time taken for the intensity to reach its quasi-steady state value after the start-up phase of the lamp is optionally also measured, the contamination of the lamp filling, as well as the electrode quality, being determined from the level of the intensity and from the time taken.

17. Method according to one or more of the preceding claims, characterized in that the gas discharge is produced in the interior of the discharge lamp, and in that the following additional method steps are carried out:
a) determining electrical parameters of the lamp, which parameters are characteristic of the functional capacity and performance of the lamp,
b) measuring the intensity of at least one spectral line,
c) repeating steps a) and b) for a few lamps which are contaminated differently, preferably including lamps which, because of impurities, ignite poorly or not at all, and form a stable arc discharge possibly after a delay or not at all, and assigning the electrical values to the corresponding spectroscopic values,
in order thereby to create a reference set of calibrated values of spectral intensities or intensity ratios for spectroscopic evaluation of the quality of such lamps.

18. Method for determining the pressure of gases, in particular noble gases, or the gas components of gas mixtures for electric lamps or radiators, the gas or the gas components being excited by means of a gas discharge so as to emit electromagnetic radiation, and the level of the (partial) pressure being determined from the intensity of a spectral fraction of this radiation, characterized in that at least one spectral line of the gas or of the gas component with pressure-dependent intensity is deliberately selected as the spectral fraction of the radiation, the (partial) pressure of the gas or of the corresponding gas component being determined from the intensity or from the intensities.

19. Method according to Claim 18, characterized in that, if the gas consists of argon or the gas mixture contains argon, the (partial) pressure of the argon is determined from the intensity of the spectral line with the wavelength 1 ≈ 763.5 nm.

20. Method according to Claim 18, characterized in that the pressure is determined from the ratio of the intensities of two spectral lines, the intensity of the second spectral line being pressure-independent, and the two spectral lines being such close neighbours that noise signals and in-phase interference signals are substantially eliminated when taking the ratio.

21. Method according to Claim 20, characterized in that the wavelength difference of the two spectral lines is less than about 100 nm.

22. Method according to Claim 21, characterized in that the difference is preferably less than 50 nm.

23. Method according to Claim 20, characterized in that, if the gas consists of argon or the gas mixture contains argon, the intensity of the spectral line of argon with the wavelength 738.4 nm is in particular used for taking the ratio.

24. Method according to Claim 18, characterized in that the gas discharge is operated in the glow range.

25. Method according to Claim 18, characterized in that the gas discharge is produced by means of radiofrequency.

26. Method according to one or more of the preceding claims, characterized in that the spectroscopic method for detecting impurities in gases is integrated by the following additional method steps in the method for manufacturing discharge lamps:
a) spectroscopic measurement by means of sample discharge within the gas system of the lamp production line, before the discharge vessel of the lamp is filled, in order to check the gas system for impurities,
b) spectroscopic measurement by means of sample discharge inside the discharge vessel, after the electrodes have been fitted into the discharge vessel, in order to check the electrode system and the wall of the discharge vessel for impurities,
c) spectroscopic measurement by means of sample discharge inside the discharge vessel, after the discharge vessel has been filled and sealed, in order to test whether the impurities in the interior of the finished lamp lie within a predetermined tolerance range.

27. Method according to Claim 26, characterized by the following additional method step d): spectroscopic measurement by means of sample discharge within the discharge vessel, after the discharge vessel has been filled and sealed, in order to test whether the cold fill pressure in the interior of the finished lamp lies within a predetermined tolerance range.

28. Method according to Claim 26, characterized by the following additional method step e): suspending the manufacture, before the discharge vessel is filled and sealed, if the measurements in method steps a) and/or b) lie outside a predetermined tolerance range.

29. Method according to Claim 26 or 27, characterized by the following additional method step f): rejecting the relevant discharge vessel if the measurements in method step c) or d) lie outside a predetermined tolerance range.

30. Method according to Claim 26, characterized in that the sample discharge of method step a) is carried out in a sample vessel connected to the vacuum ring main.

31. Method according to Claim 26 or 27, characterized in that the sample discharges of method steps b) and c) and, if appropriate, d) are carried out between the electrodes of the discharge vessel.

32. Arrangement for carrying out a method having features described in Claims 1 to 17, 18 to 25 or 26 to 31, characterized by a vessel (1; 15) in which the gas or gas mixture and the impurities possibly contained therein are located, a power supply unit (7; 16) which is connected to the vessel (1) via an input coupling device (3, 4, 5) -and produces the gas discharge, a spectroscopic measuring instrument (12; 18-22) which measures the intensity (intensities) of the spectral line(s), as well as an evaluation device (13; 23, 24) which, from the measurements, determines the concentration of the impurities or the (partial) pressure of the gas or of the gas component.

33. Arrangement according to Claim 32, characterized in that the power supply unit consists of a radiofrequency transmitter (7; 16), and in that the input coupling device consists of a high-voltage transformer (5) and two RF electrodes (3, 4), the RF electrodes being connected to the secondary winding (8), and the radiofrequency transmitter (7) being connected to the primary winding (6), of the high-voltage transformer (5).

34. Arrangement according to Claim 32, characterized in that the vessel consists of a discharge vessel of a discharge lamp (15), two lamp electrodes being arranged in the interior of the discharge vessel and each being connected to electrical leads which are routed out in gas-tight fashion and are for their part connected to the power supply unit (16), so that the lamp electrodes are a component of the input coupling device.

35. Arrangement according to Claim 33, characterized in that at least one of the RF electrodes (3, 4) is arranged on the outer wall of the vessel.

36. Arrangement according to Claim 35, characterized in that the vessel consists of an incandescent lamp bulb which has a first RF electrode fitted to its outer wall, a filament being arranged in the interior of the bulb and being connected to an electrical lead which is routed out in gas-tight fashion and is for its part connected to the radiofrequency transmitter, so that the filament serves as the second RF electrode.

37. Arrangement according to Claim 32, characterized in that the spectral measuring instrument consists of a spectrometer with detectors, the radiation being resolved by means of the spectrometer into its spectral fractions, these being fed to the detectors and converted by the latter into electric signals corresponding to their intensity.

38. Arrangement according to Claim 37, characterized in that the evaluation device consists of a computer which reads in and further processes the electric signals, and as a result outputs the value of the gas pressure and/or the concentration of the impurity (impurities).

## Revendications

1. Procédé pour déceler des impuretés dans des gaz, notamment dans des gaz rares ou dans des mélanges gazeux pour des lampes électriques ou des émetteurs, le gaz ou les constituants gazeux du mélange gazeux et les impuretés qui y sont éventuellement contenues étant excités au moyen d'une décharge dans un gaz prévue pour l'émission d'un rayonnement électromagnétique et l'intensité d'une composante spectrale de ce rayonnement étant mesurée pour déceler les impuretés, caractérisé en ce que, comme composante spectrale, on sélectionne au moins une raie spectrale ayant une intensité dans une grande mesure indépendante de la pression dans le domaine pertinent.

2. Procédé suivant la revendication 1, caractérisé en ce qu'on sélectionne la raie spectrale ou les raies spectrales du gaz ou des constituants gazeux dont la longueur d'onde ou les longueurs d'ondes correspondent à une énergie d'excitation supérieure à celle des impuretés à déceler.

3. Procédé suivant la revendication 2, caractérisé en ce que, dans le cas où le gaz est constitué d'argon où le mélange gazeux contient de l'argon, on sélectionne une ou plusieurs des raies spectrales de l'argon ayant les longueurs d'ondes suivantes : 738,4 nm, 772,4 nm, 811,5 nm.

4. Procédé suivant la revendication 1, caractérisé en ce que l'on sélectionne une raie spectrale de chaque impureté, l'intensité de cette raie spectrale étant une mesure directe de la concentration de l'impureté correspondante.

5. Procédé suivant la revendication 1, caractérisé en ce que les impuretés comprennent l'une des molécules N₂, CN, CH ou C₂ ou une combinaison de ces molécules.

6. Procédé suivant la revendication 4 ou 5, caractérisé en ce que la raie spectrale a une longueur d'onde de 357,7 nm, 388,34 nm, 388,9 nm ou 468,48 nm et 516,5 nm et est une partie d'une bande moléculaire de la molécule associée.

7. Procède suivant la revendication 4, 5 ou 6, caractérisé en ce que, dans le cas où le gaz est constitué d'argon ou le mélange gazeux contient de l'argon, on norme l'intensité spectrale de l'impureté sur l'intensité d'une raie d'argon dans une grande mesure indépendante de la pression.

8. Procédé suivant la revendication 7, caractérisé en ce que la longueur d'onde de la raie d'argon est de 738,4 nm.

9. Procédé suivant l'une ou plusieurs des revendications précédentes, caractérisé en ce que l'on forme le quotient des intensités de deux raies spectrales, les deux raies spectrales étant étroitement voisines, si bien que les signaux de bruit et des signaux parasites équiphases sont dans une grande mesure éliminés lors de la formation du quotient.

10. Procédé suivant la revendication 9, caractérisé en ce que la différence des longueurs ondes des deux raies spectrales est inférieure à environ 100 nm environ.

11. Procédé suivant la revendication 10, caractérisé en ce que la différence est de préférence inférieure à 50 nm.

12. Procédé suivant la revendication 9, caractérisé en ce que, pour former le quotient, on sélectionne des raies spectrales ayant des longueurs d'ondes dans l'intervalle compris entre 650 nm et 1000 nm.

13. Procédé suivant la revendication 11, caractérisé en ce que, dans le cas où le gaz est constitué d'argon où le mélange gazeux contient de l'argon, on forme le quotient des intensités des raies spectrales de l'argon en ayant les longueurs d'ondes λ₁ = 772,4 nm et λ₂ = 738,4 nm.

14. Procédé suivant la revendication 1, caractérisé en ce que l'on fait fonctionner la décharge dans un gaz dans le domaine incandescent.

15. Procédé suivant la revendication 1, caractérisé en ce que l'on produit la décharge dans un gaz au moyen d'une haute fréquence.

16. Procédé suivant l'une ou plusieurs des revendications précédentes, caractérisé en ce que l'on produit la décharge dans un gaz à l'intérieur d'une lampe à décharge haute pression et en ce que, outre le niveau de l'intensité d'au moins une raie spectrale, on mesure éventuellement de plus la durée qui s'écoule jusqu'à ce que l'intensité atteigne sa valeur quasi stationnaire après la phase d'amorçage de la lampe, l'impureté de l'atmosphère de la lampe ainsi que la qualité des électrodes étant déterminées à partir du niveau de l'intensité et de la durée.

17. Procédé suivant l'une ou plusieurs des revendications précédentes, caractérisé en ce que l'on produit la décharge dans un gaz à l'intérieur d'une lampe à décharge et en ce que l'on effectue les étapes opératoires supplémentaires suivantes :
a) on détermine des paramètres électriques de la lampe, ces paramètres étant caractéristiques de la capacité à fonctionner et de la performance de la lampe,
b) on mesure l'intensité d'au moins une raie spectrale,
c) on répète les étapes a) et b) pour quelques lampes ayant des impuretés différentes, de préférence y compris des lampes qui, en raison d'impuretés s'ouvrent mal ou ne s'amorcent pas, ainsi que des lampes qui forment éventuellement avec retard une décharge d'arc ou ne forment pas de décharge d'arc stable, et on associe les valeurs électriques aux valeurs spectroscopiques correspondantes,
afin d'obtenir ainsi un ensemble de références de valeurs calibrées d'intensités spectrales ou de rapport d'intensité, pour l'évaluation spectroscopique de la qualité de lampes de ce genre.

18. Procédé pour déterminer la pression de gaz, notamment de gaz rares, ou des constituants gazeux de mélanges gazeux pour des lampes électriques ou des émetteurs, le gaz ou les constituants gazeux étant excités au moyen d'une décharge dans un gaz pour l'émission d'un rayonnement électromagnétique et la valeur de la pression (partielle) étant déterminée à partir de l'intensité d'une composante spectrale de ce rayonnement, caractérisé en ce que, comme composante spectrale du rayonnement, on sélectionne au moins une raie spectrale du gaz ou des constituants gazeux ayant une intensité indépendante de la pression, la pression (partielle) du gaz ou des constituants gazeux correspondants étant déterminée à partir de l'intensité ou des intensités.

19. Procédé suivant la revendication 18, caractérisé en ce que, dans la cas où le gaz est constitué d'argon ou le mélange gazeux contient de l'argon, on détermine la pression (partielle) de l'argon à partir de l'intensité de la raie spectrale ayant la longueur d'onde λ ≅ 763,5 nm.

20. Procédé suivant la revendication 18, caractérisé en ce que l'on détermine la pression à partir du quotient des intensités de deux raies spectrales, l'intensité de la deuxième raie spectrale étant indépendante de la pression et les deux raies spectrales étant si étroitement voisines que des signaux de bruit et des signaux parasites équiphases sont éliminés dans une grande mesure lors de la formation du quotient.

21. Procédé suivant la revendication 20, caractérisé en ce que la différence des longueurs d'ondes des deux raies spectrales est inférieure à 100 nm environ.

22. Procédé suivant la revendication 21, caractérisé en ce que la différence est de préférence inférieure à 50 nm.

23. Procédé suivant la revendication 20, caractérisé en ce que, dans le cas où le gaz est constitué d'argon où le mélange gazeux contient de l'argon, on utilise pour forme le quotient notamment l'intensité de la raie spectrale de l'argon ayant la longueur d'onde 738,4 nm.

24. Procédé suivant la revendication 18, caractérisé en ce que l'on fait fonctionner la décharge dans le domaine incandescent.

25. Procédé suivant la revendication 18, caractérisé en ce que l'on produit la décharge dans un gaz au moyen d'une haute fréquence.

26. Procédé suivant l'une ou plusieurs des revendications précédentes, caractérisé en ce que, par les étapes opératoires supplémentaires suivantes, on intègre au procédé de fabrication de lampes à décharge le procédé spectroscopique pour déceler des impuretés dans des gaz:
a) mesure spectroscopique au moyen d'une décharge test à l'intérieur du système gazeux de la ligne de fabrication des lampes, avant le remplissage de l'enceinte de décharge de la lampe, pour contrôler la présence d'impuretés dans le système gazeux,
b) mesure spectroscopique au moyen d'une décharge test à l'intérieur de l'enceinte de décharge, après l'introduction des électrodes dans l'enceinte de décharge, pour contrôler la présence d'impuretés sur le système d'électrode et la paroi de l'enceinte de décharge,
c) mesure spectroscopique au moyen d'une décharge test à l'intérieur de l'enceinte de décharge, après le remplissage et la fermeture de l'enceinte de décharge, pour vérifier si les impuretés à l'intérieur de la lampe finie sont dans un intervalle de tolérance prescrit.

27. Procédé suivant la revendication 26, caractérisé par l'étape d) opératoire supplémentaire suivante : mesure spectroscopique au moyen d'une décharge test à l'intérieur de l'enceinte de décharge, après le remplissage et la fermeture de l'enceinte de décharge, pour vérifier si la pression d'atmosphère froide à l'intérieur de la lampe finie est dans un intervalle de tolérance prescrit.

28. Procédé suivant la revendication 26, caractérisé par l'étape opératoire supplémentaire suivante e) : interruption de la fabrication avant le remplissage et la fermeture de l'enceinte de décharge, dans le cas ou les valeurs de mesure pour les étapes a) et/ou b) opératoires sont à l'extérieur d'un intervalle de tolérance pouvant être prescrit.

29. Procédé suivant la revendication 26 ou 27, caractérisé par l'étape opératoire supplémentaire suivante f) : retrait de l'enceinte de décharge concernée, dans le cas où les valeurs de mesure pour l'étape opératoire c) et/ou d) sont à l'extérieur d'un intervalle de tolérance pouvant être prescrit.

30. Procédé suivant la revendication 26, caractérisé en ce que l'on effectue la décharge test de l'étape a) opératoire dans un récipient test communiquant avec la conduite annulaire pour faire le vide.

31. Procédé suivant la revendication 26 ou 27, caractérisé en ce que l'on effectue les décharges test des étapes b) et c) et éventuellement d) opératoires entre les électrodes de l'enceinte de décharge.

32. Dispositif pour mettre en oeuvre un procédé comportant les dispositions qui sont décrites aux revendications 1 à 17, 18 à 25 ou 26 à 31, caractérisé par une enceinte (1 ; 15) dans laquelle se trouve le gaz ou le mélange gazeux ou les impuretés qui y sont éventuellement contenues, une unité (7 ; 16) d'alimentation en énergie, qui est reliée à l'enceinte (1) par l'intermédiaire d'un dispositif (3, 4, 5) d'alimentation et qui produit la décharge dans un gaz, un dispositif (12 ; 18-22) de mesure spectroscopique, qui mesure l'intensité de la raie spectrale ou les intensités des raies spectrales, ainsi qu'un dispositif (13 ; 23, 24) d'exploitation, qui détermine la concentration des impuretés ou la pression (partielle) du gaz ou des constituants gazeux à partir des valeurs de mesure.

33. Dispositif suivant la revendication 32, caractérisé en ce que l'unité d'alimentation en énergie est constituée d'un émetteur (7 ; 16) haute fréquence et en ce que le dispositif d'alimentation est constitué d'un transformateur (5) haute tension et de deux électrodes (3,4) HF, les électrodes HF étant reliées à l'enroulement (8) secondaire et l'émetteur (7) haute fréquence étant relié à l'enroulement (6) primaire du transformateur (5) haute tension.

34. Dispositif suivant la revendication 32, caractérisé en ce que l'enceinte est constituée d'une enceinte de décharge d'une lampe (15) à décharge, deux électrodes de lampe, qui sont reliées chacune à des entrées de courant qui vont à l'extérieur de manière étanche au gaz et qui, à leur tour, sont reliées à l'unité (16) d'alimentation en énergie, sont montées à l'intérieur de l'enceinte de décharge, si bien que les électrodes de la lampe font partie du dispositif d'alimentation.

35. Dispositif suivant la revendication 33, caractérisé en ce qu'au moins une des électrodes (3,4) HF est montée sur la paroi extérieure de l'enceinte.

36. Dispositif suivant la revendication 35, caractérisé en ce que l'enceinte est constituée d'une lampe à incandescence sur la paroi extérieure de laquelle est montée une première électrode HF, un filament incandescent, qui est relié à une entrée de courant qui va à l'extérieur de manière étanche au gaz et qui, pour sa part, est relié à l'émetteur haute fréquence, étant monté à l'intérieur de l'ampoule, si bien que le filament incandescent sert de deuxième électrode HF.

37. Dispositif suivant la revendication 32, caractérisé en ce que le dispositif de mesure spectrale est constitué d'un spectromètre comportant des détecteurs, le rayonnement étant décomposé en ses composantes spectrales au moyen du spectromètre, ces composantes étant envoyées au détecteur et converties par ces détecteurs en signaux électriques correspondant à leur intensité.

38. Dispositif suivant la revendication 37, caractérisé en ce que le dispositif d'exploitation est constitué d'un ordinateur qui entre les signaux électriques, les traite ultérieurement et donne comme résultat la valeur de la pression gazeuse et/ou la concentration de l'impureté ou des impuretés.
